# FASCICULE DE BREVET EUROPEEN

(11) **EP 1 807 275 B1**
(45) Date de publication et mention de la délivrance du brevet: **18.02.2009**
(21) Numéro de dépôt: 05809428.5
(22) Date de dépôt: 10.10.2005
(51) Int. Cl.: B60J 7/185

(54) **VEHICULE A TOIT PLIABLE VERROUILLABLE**
FAHRZEUG MIT EINEM FESTSTELLBAREN FALTDACH
VEHICLE COMPRISING A LOCKABLE FOLDING ROOF

(30) Priorité: 02.11.2004 FR 0411671; 08.11.2004 FR 0411884
(43) Date de publication de la demande: 18.07.2007
(73) Titulaire: Heuliez, 79142 Cerizay Cedex (FR)
(72) Inventeur: QUEVEAU, Paul, F-79140 Montravers (FR); QUEVEAU, Gérard, F-79140 Le Pin (FR); GUILLEZ, Jean-Marc, F-79140 Cirières (FR)
(74) Mandataire: Lemoine, Jean-Sébastien
(86) Numéro de dépôt international: PCT/FR2005/002500
(87) Numéro de publication internationale: WO 2006/048517

(56) Documents cités:
- EP-A- 0 835 779
- EP-A- 1 429 931
- DE-A1- 10 242 725
- FR-A- 2 845 321
- US-A1- 2002 163 202
- US-A1- 2004 032 148
- US-A1- 2004 046 417

## Description

La présente invention concerne un véhicule à toit mobile entre une position déployée et une position pliée, et verrouillable dans au moins l'une de ces positions.

On connaît un véhicule du type comprenant un bâti, un toit qui est mobile par rapport au bâti entre une position déployée dans laquelle il recouvre l'habitacle, et une position pliée, des moyens d'entraînement adaptés à entraîner le toit de l'une à l'autre de ses positions extrêmes, et des moyens de verrouillage adaptés à verrouiller le toit dans au moins l'une de ses positions extrêmes, comme montré dans les documents EP0835779 ou DE10242725

Toutefois, dans ce véhicule de l'art antérieur, la commande des moyens de verrouillage nécessite des moyens d'actionnement spécifiques et des capteurs afin de déterminer que le toit est effectivement dans la position exacte dans laquelle on veut le verrouiller. Or de tels moyens représentent un certain coût et rendent le véhicule complexe.

Le présente invention vise à réaliser un véhicule dont la commande des moyens de verrouillage du toit en position déployée ou pliée est simple et fiable et ne dépend pas d'un tel capteur.

Selon l'invention, dans le véhicule du type précité, les moyens de verrouillage sont commandés par les moyens d'entraînement quand le toit est dans chacune de ses positions extrêmes verrouillables.

Ainsi, selon l'invention, les moyens de verrouillage du toit sont commandés par les moyens d'entraînement du toit, ce qui permet de se passer de capteur de fin de course détectant la position du toit ainsi que de moyens d'actionnement spécifiques. Un autre avantage est de réduire le temps de cycle du mouvement du toit, le verrouillage et déverrouillage se réalisant directement après la fin du mouvement du toit et non plus après un laps de temps inhérents aux systèmes avec des capteurs de fin de course reliés à des unités de contrôles, aux moyens d'entraînement du toit et aux moyens d'actionnement spécifiques.

D'autres particularités et avantages apparaîtront dans la description des deux modes de réalisation donnés à titre d'exemples non limitatifs et illustrés par les dessins mis en annexe.
La figure 1 est une vue schématique de côté de la partie d'un véhicule conforme au premier mode de réalisation de la présente invention, le toit étant en position déployée,
La figure 2 est une vue schématique similaire à la figure 1, le toit étant en position pliée,
La figure 3 est une vue de côté illustrant la liaison entre le bâti, le toit et un coulisseau conformément au premier mode de réalisation de la présente invention,
La figure 4 est une vue de face selon la droite IV-IV de la figure 3,
La figure 5 est une vue de côté représentant la liaison entre le coulisseau et les moyens de verrouillage, le coulisseau étant dans sa position extrême avant dans une glissière, les moyens de verrouillage étant verrouillés,
La figure 6 est une vue de côté similaire à la figure 5, le coulisseau étant dans sa position extrême avant, les moyens de verrouillage étant déverrouillés,
La figure 7 est une vue de côté similaire aux figures 5 et 6, le coulisseau se déplaçant le long de la glissière,
Les figures 8 à 11 sont des schémas similaires aux figures 5 à 7, illustrant le déploiement du toit et son verrouillage en position déployée selon le premier mode de réalisation,
La figure 12 représente de façon schématique les moyens d'entraînement utilisés dans le premier mode de réalisation,
La figure 13 est une vue schématique de côté de la partie d'un véhicule conforme au second mode de réalisation de la présente invention, le toit étant en position déployée,
La figure 14 est une vue schématique de dessus représentant les organes de verrouillage utilisé dans le second mode de réalisation,
La figure 15 est une vue en coupe transversale des organes de verrouillage selon la droite XV-XV de la figure 14, et
Les figures 16 à 19 sont des schémas illustrant le déverrouillage du toit en position déployée, son déplacement jusqu'à se position fermée, et son verrouillage dans cette position selon le second mode de réalisation.

Dans les deux modes de réalisation, un véhicule comprend un bâti muni de deux brancards 1 disposés longitudinalement de chaque côté de l'habitacle, chaque brancard 1 étant fixé, par son extrémité avant, à la traverse avant supportant le pare-brise, et, par son extrémité arrière, à une custode 2. Par ailleurs, dans les présents mode de réalisation, le bâti comprend également deux arches 3, chaque arche 3 étant située dans le prolongement longitudinal du brancard 1 correspondant et étant fixée par son extrémité avant à la custode 2 correspondante, et, par son extrémité arrière, à un élément arrière du bâti.

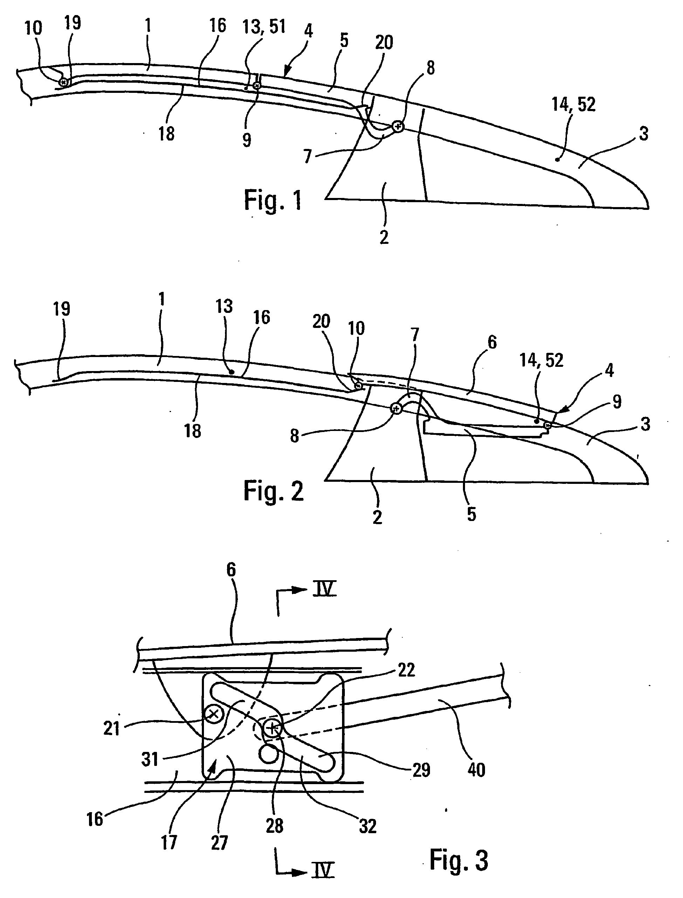

Le véhicule comporte également un toit 4 qui est mobile par rapport au bâti entre, d'une part, une position déployée dans laquelle il recouvre l'habitacle du véhicule et est disposé entre les brancards 1, et, d'autre part, une position pliée dans laquelle il découvre l'habitacle et est disposé entre les arches 3. Le toit 4 comprend, deux éléments 5,6 mobiles l'un par rapport à l'autre : un élément arrière 5 dont la partie arrière est articulée au bâti (dans les présents modes de réalisation par l'intermédiaire d'un bras 7 monté pivotant par rapport à un axe de rotation 8 transversal au véhicule), et un élément avant 6 dont la partie arrière est articulée à la partie avant de l'élément arrière 5 du toit 4 (dans les présents exemples par un axe 9 transversal au véhicule). Quand le toit 4 est en position déployée, l'élément arrière 5 est disposé dans le prolongement longitudinal de l'élément avant 6, derrière ce dernier (voir la figure 1). Quand le toit 4 est en position pliée, l'élément avant 6 est disposé au-dessus de l'élément arrière 5 (voir la figure 2).

Par ailleurs, le véhicule comprend des moyens d'entraînement 10 qui sont adaptés à entraîner le toit 4 de l'une à l'autre de ses positions extrêmes.

De plus, le véhicule comprend des moyens de verrouillage 11 qui sont adaptés à verrouiller le toit 4 dans au moins une de ses positions extrêmes. En l'occurrence, le toit est verrouillable dans ses deux positions extrêmes (positions déployée et pliée). Dans les présents modes de réalisation, le toit 4 comprend, de chaque côté, un organe de verrouillage 12 qui est mobile entre une position de libération et une position verrouillage, le bâti comportant, de chaque côté, d'une part, un organe complémentaire avant de verrouillage 13 qui est fixé au brancard 1 correspondant et qui est adapté à coopérer avec l'organe de verrouillage 12 quand le toit 4 est dans sa position déployée, et, d'autre part, un organe complémentaire arrière de verrouillage 14 qui est fixé à l'arche 3 correspondante et qui est adapté à coopérer avec l'organe de verrouillage 12 quand le toit 4 est dans sa position pliée. Un même organe de verrouillage 12 coopère avec les deux organes complémentaires de verrouillage 13,14 qui correspondent aux deux positions extrêmes du toit 4.

Selon l'invention, les moyens de verrouillage 11 sont commandés par les moyens d'entraînement 10 quand le toit 4 est dans chacune de ses positions extrêmes verrouillables (en l'occurrence, dans ses deux positions extrêmes). Comme les moyens d'entraînement 10 utilisés pour déplacer le toit 4 sont particulièrement puissants, le verrouillage de ce dernier, réalisé par ces mêmes moyens d'entraînement 10, est particulièrement fiable et procure rigidité et stabilité au toit 4 une fois verrouillée.

De façon plus précise, dans ces deux modes de réalisation, les moyens d'entraînement 10 sont reliés à un système 15 qui permet de désactiver l'entraînement du toit 4 dans chacune de ses positions extrêmes verrouillables lors de l'activation des moyens de verrouillage 11.

Selon ces deux modes de réalisation, le système 15 comprend, de chaque côté du véhicule, une glissière 16 et un dispositif d'activation 17 qui est monté coulissant le long de la glissière 16.

Chaque glissière 16 est fixée au bâti et comporte une partie de déplacement 18 prolongée à au moins une de ses extrémités par une partie de verrouillage 19,20 correspondant à une position extrême verrouillable du toit 4. Dans les présents exemples, la glissière 16 comprend deux parties de verrouillage 19,20.

Chaque dispositif d'activation 17 est relié au toit 4, aux moyens d'entraînement 10 et aux moyens de verrouillage 11. Le dispositif d'activation 17 et la glissière 16 sont conformés de sorte que, le dispositif d'activation 17, sous l'action des moyens d'entraînement 10, entraîne le déplacement du toit 4 de l'une à l'autre de ses positions extrêmes quand il coulisse le long de la partie de déplacement 18, et active les moyens de verrouillage 11 quand il est assujetti à la partie de verrouillage 19,20 correspondante à la position extrême verrouillable.

Quand le dispositif d'activation 17 coulisse le long de la partie de déplacement 18, les moyens de verrouillage 11 sont immobiles par rapport au toit 4.

Dans les présents modes de réalisation, le toit 4 et les moyens d'entraînement 10 sont montés pivotant, de chaque côté du véhicule, au dispositif d'activation 17 correspondant, selon, respectivement, un premier axe 21 et un second axe 22, les deux axes 21,22 étant transversaux au véhicule.

Dans le premier mode de réalisation, chaque glissière 16 est fixée le long d'un brancard 1.

La partie de déplacement 18 correspond sensiblement à toute la longueur de la glissière 16 et a un profil qui suit celui du brancard 1 correspondant, et donc, celui du toit 4 en position déployée. La partie de verrouillage avant 19 prolonge vers l'avant la partie de déplacement 18 et forme, avec celle-ci, un coude de sorte que l'extrémité 23 de la partie de verrouillage avant 19 est plus basse que son point de jonction 24 avec la partie de déplacement 18. L'avantage d'une telle orientation de la partie de verrouillage avant 19 est de permettre un déplacement vertical rapide de l'élément avant 6 du toit 4 quand il est à proximité immédiate de sa position déployée afin d'éviter tout endommagement des joints d'étanchéités.

De façon similaire, la partie de verrouillage arrière 20 prolonge vers l'arrière la partie de déplacement 18 et forme, avec celle-ci, un coude de sorte que l'extrémité 25 de la partie de verrouillage arrière 20 est plus haute que son point de jonction 26 avec la partie de déplacement 18.

Dans le premier mode de réalisation, chaque dispositif d'activation 17 est formé, d'une part, par un coulisseau 27 qui est monté coulissant et prisonnier dans la glissière 16 correspondante, et, d'autre part, par un élément de guidage 28 qui a la forme d'une tige et qui est monté coulissant et prisonnier dans une rainure 29 réalisée le long du coulisseau 27. Le déplacement des éléments de guidage 28 dans chaque rainure 29 dépend de la position des coulisseaux 27 dans les glissières 16.

Chaque rainure 29 comprend une partie centrale 30, une partie avant 31, et une partie arrière 32. La partie centrale 30 est orientée sensiblement perpendiculairement à l'orientation longitudinale de la partie de déplacement 18 de la glissière 16 (avec, dans le présent exemple, une légère inclinaison de bas en haut et d'arrière en avant). La partie avant 31 prolonge vers l'avant la partie centrale 30 et forme, avec celle-ci, un coude de façon à être, quand le coulisseau 27 se trouve dans la partie de verrouillage avant 19, sensiblement alignée avec la partie de déplacement 18. De façon similaire, la partie arrière 32 prolonge vers l'arrière la partie centrale 30 et forme, avec celle-ci, un coude de façon à être, quand le coulisseau 27 se trouve dans la partie de verrouillage arrière 20, sensiblement alignée avec la partie de déplacement 18.

Dans le premier mode de réalisation, le toit 4 est monté pivotant sur chaque coulisseau 27 selon le premier axe 21 par la partie avant de l'élément avant 6 du toit 4.

Dans le premier mode de réalisation, les moyens d'entraînement 10 sont reliés au dispositif d'activation 17 par l'intermédiaire des éléments de guidage 28, selon l'axe 22 le long duquel s'étendent les éléments de guidage 28. Les moyens d'entraînement 10 comprennent un moteur 33 qui est adapté à entraîner le coulissement des deux éléments de guidage 28 le long des brancards 1, aussi bien dans le sens du pliage du toit 4 que de son déploiement. Les moyens d'entraînement 10 comprennent également, pour chaque élément de guidage 28, un câble de traction 34 sans fin qui est monté coulissant le long de deux ornières 35,36 qui s'étendent le long de la glissière 16. Le câble 34 comporte deux brins 37,38, chaque brin 37,38 étant relié par une première extrémité au moteur 33, et par une deuxième extrémité à l'élément de guidage 28. Le premier brin 37 est monté coulissant tout le long d'une première ornière 35, et est envoyé, via une poulie de renvoie 39 qui est située en avant de la glissière 16, dans la seconde ornière 36 où il rejoint l'élément de guidage 28. Le second brin 38 est monté coulissant dans la portion restante de la seconde ornière 36.

Les mouvements respectifs des éléments de guidage 28 le long des rainures 29 et des coulisseaux 27 le long des glissières 16, sous l'action des moyens d'entraînement 10, sont imposés par le profil des glissières 16 et des rainures 29. Les moyens de verrouillage 11 sont commandés par le déplacement des éléments de guidage 28 le long des rainures 29, ce déplacement dépendant de la position des coulisseaux 27 dans les glissières 17.

Dans le premier mode de réalisation, les organes de verrouillage 12 sont portés par l'élément avant 6 du toit 4, à proximité de son articulation avec l'élément arrière 5. De chaque côté du véhicule, une bielle 40 est montée rotative, d'une part, selon l'axe 22, à l'élément de guidage 28, et d'autre part, selon un axe 41 transversal au véhicule, à l'organe de verrouillage 12 correspondant.

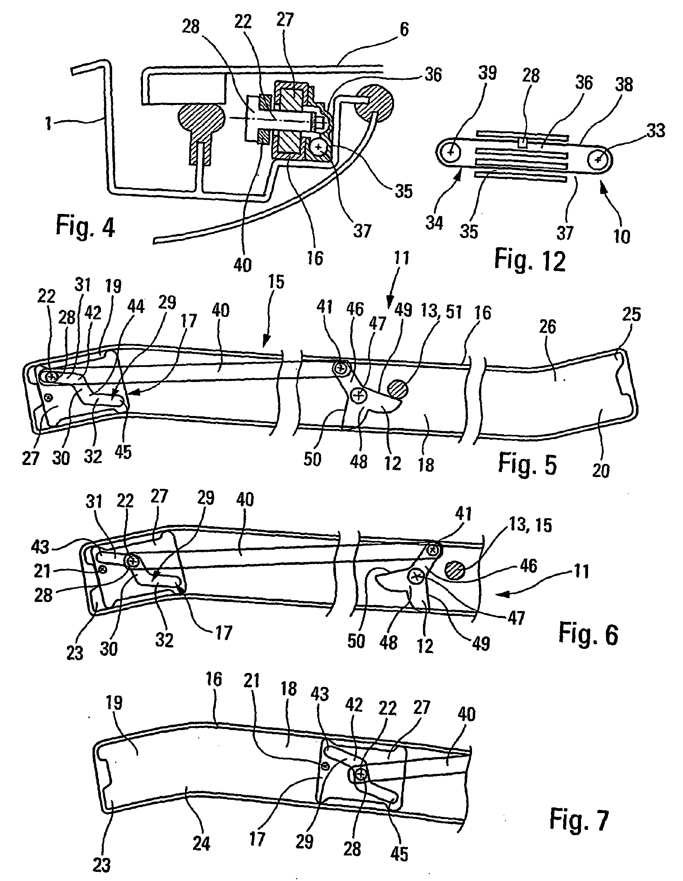

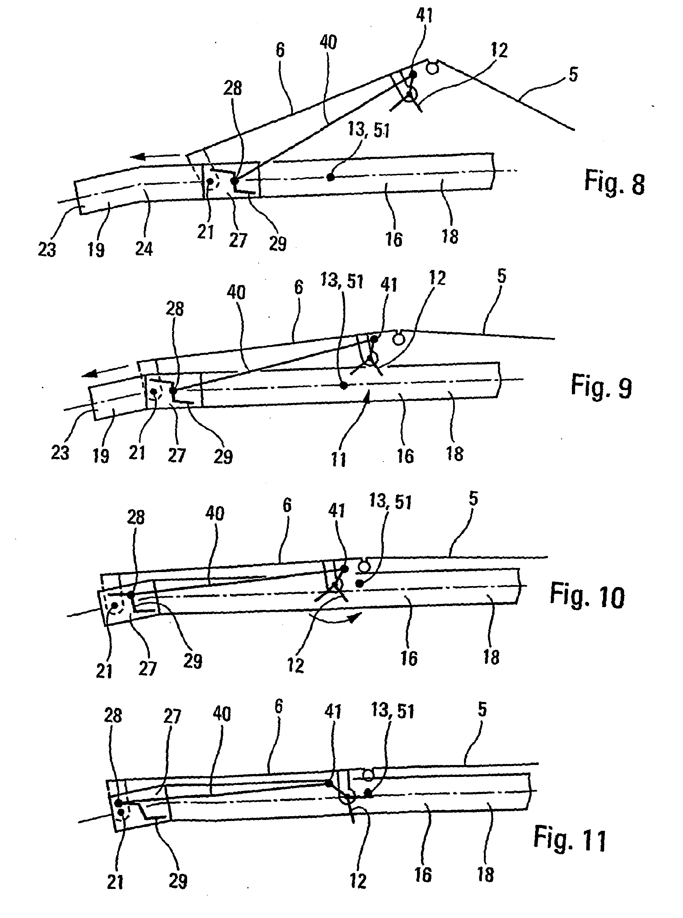

Le mode de fonctionnement du système 15 du premier mode de réalisation est le suivant :
Quand le coulisseau 27 se trouve dans la partie de déplacement 18, l'élément de guidage 28 se situe dans la partie centrale 30 de la rainure 29. Ainsi, quand les moyens d'entraînement 10 entraînent l'élément de guidage 28 selon une direction correspondant à l'orientation de la glissière 16 où se trouve le coulisseau 27, l'élément de guidage 28 est en butée contre les parois sensiblement verticales de la partie centrale 30 de la rainure 29, et il entraîne le coulissement du coulisseau 27 le long de la glissière 17 (et donc le déplacement du toit 4). Le mouvement longitudinal de l'élément de guidage 28 dans le coulisseau 27 est alors sensiblement nul (à la pente de la partie centrale 30 près), et de ce fait, la bielle 40 reste immobile et également l'organe de verrouillage 12.
Quand le coulisseau 27 passe de la partie de déplacement 18 à la partie de verrouillage avant 19, sous l'action des moyens d'entraînement 10 et vu la configuration de la rainure 29, l'élément de guidage 28 coulisse longitudinalement le long de la partie avant 31 de la rainure 29. De même, quand le coulisseau 27 passe de la partie de déplacement 18 à la partie de verrouillage arrière 20, sous l'action des moyens d'entraînement 10 et vu la configuration de la rainure 29, l'élément de guidage 28 coulisse longitudinalement le long de la partie arrière 32 de la rainure 29.
Quand l'élément de guidage 28 est au point de jonction 42 de la partie avant 31 de la rainure 29 avec la partie centrale 30, l'organe de verrouillage 12 est dans sa position de libération (comme on peut le voir aux figures 6 et 10), et, quand l'élément de guidage 28 est à l'extrémité 43 de la partie avant 31 de la rainure 29, l'organe de verrouillage 12 est dans sa position de verrouillage (comme on peut le voir aux figures 5 et 11). Ainsi, quand les moyens d'entraînement 10 entraînent l'élément de guidage 28 quand le coulisseau 27 est en butée contre l'extrémité 23 de la partie de verrouillage avant 19, l'élément de guidage 28 coulisse le long de la partie centrale 30 de la rainure 29 (avec un déplacement longitudinal sensiblement nul), puis le long de la partie avant 31, ce qui entraîne l'activation de l'organe de verrouillage 12 avec le toit 4 en position déployée.
Quand l'élément de guidage 28 est au point de jonction 44 de la partie arrière 32 de la rainure 29 avec la partie centrale 30, l'organe de verrouillage 12 est dans sa position de libération, et, quand l'élément de guidage 28 est à l'extrémité 45 de la partie arrière 32 de la rainure 29, l'organe de verrouillage 12 est dans sa position de verrouillage. Ainsi, quand les moyens entraînement 10 entraînent l'élément de guidage 28 quand le coulisseau 27 est en butée contre l'extrémité 25 de la partie de verrouillage arrière 20, l'élément de guidage 28 coulisse le long de la partie centrale 30 de la rainure 29 (avec un déplacement longitudinal sensiblement nul), puis le long de la partie arrière 32, ce qui entraîne l'activation de l'organe de verrouillage 12 avec le toit 4 en position pliée.

Dans le premier mode de réalisation, chaque organe de verrouillage 12 comprend une tige d'entraînement 46 qui est montée rotative, d'une part, sur l'élément avant 6 du toit 4 selon un axe 47 transversal au véhicule, et, d'autre part, sur la bielle 40, selon l'axe 41.

L'organe de verrouillage 12 comprend également une patte de verrouillage 48 qui est fixée à la tige d'entraînement 46, et qui comprend une surface d'appui avant 49 et une surface d'appui arrière 50. La surface d'appui avant 49 est orientée vers l'arrière quand l'organe de verrouillage 12 est dans sa position de libération, et est adaptée à venir en butée contre l'organe complémentaire avant de verrouillage 13 (en l'occurrence formé par un doigt de verrouillage avant 51 s'étendant transversalement au véhicule) quand l'élément de guidage 28 est à l'extrémité 43 de la partie avant 31 de la rainure 29 de façon à verrouiller le toit 4 dans sa position déployée. Réciproquement, la surface d'appui arrière 50 est orientée vers l'avant quand l'organe de verrouillage 12 est dans sa position de libération, et est adaptée à venir en butée contre l'organe complémentaire arrière de verrouillage 14 (en l'occurrence formé par un doigt de verrouillage arrière 52 s'étendant transversalement au véhicule) quand l'élément de guidage 28 est à l'extrémité 45 de la partie arrière 32 de la rainure 29 de façon à verrouiller le toit 4 dans sa position pliée.

Selon ce mode de réalisation, le verrouillage du toit 4 dans l'une ou l'autre de ses positions se fait par son placage vers le bas. Ainsi, par exemple pour le verrouillage en position déployée, comme on peut le voir à la figure 10, avant le verrouillage, le toit 4 n'est pas exactement dans sa position déployée, et l'activation des moyens de verrouillage 11 entraîne non seulement le verrouillage mais complète également le mouvement du toit du fait de la pression exercée par la surface d'appui avant 49 sur le doigt de verrouillage avant 51.

Dans le second mode de réalisation, chaque glissière 16 est fixée au voisinage de l'axe de rotation 8 du bras 7 au bâti.

La partie de déplacement 18 a un profil en arc de cercle centré sur l'axe de rotation 8, la partie de déplacement 18 étant orientée sensiblement verticalement. La partie de verrouillage avant 19 prolonge vers le bas la partie de déplacement 18 et forme, avec celle-ci, un coude de sorte que l'extrémité 23 de la partie de verrouillage avant 19 est plus basse que son point de jonction 24 avec la partie de déplacement 18. De façon similaire, la partie de verrouillage arrière 20 prolonge vers le haut la partie de déplacement 18 et forme, avec celle-ci, un coude de sorte que l'extrémité 25 de la partie de verrouillage arrière 20 est plus haute que son point de jonction 26 avec la partie de déplacement 18.

Dans le second mode de réalisation, chaque dispositif d'activation 17 est formé par une unique pièce d'activation 53 qui est montée coulissante par rapport à la glissière 16 correspondante. La pièce d'activation 53 comprend un arbre de coulissement 54 qui est orienté transversalement au véhicule et qui est monté coulissant et prisonnier dans la glissière 16 correspondante. Dans le présent mode de réalisation, la pièce d'activation 53 est en forme de V, l'arbre de coulissement 54 étant à l'une des deux extrémités du V. Le type de déplacement des pièces d'activation 53 par rapport aux glissières 16 dépend de la position des arbres de coulissement 54 dans les glissières 16.

Dans le second mode de réalisation, le toit 4 est monté pivotant sur chaque pièce d'activation 53 selon le premier axe 21 par le bras 7 fixé à l'élément arrière 5 du toit 4. La pièce d'activation 53 comprend à cet effet un arbre de déplacement 55 qui s'étend selon l'axe 21 et qui est relié au bras 7. Dans le présent mode de réalisation, l'arbre de déplacement 55 est à la pointe du V.

Dans le second mode de réalisation, les moyens d'entraînement 10 sont reliés de façon pivotante aux pièces d'activation 53 par l'intermédiaire des arbres de coulissement 54 selon l'axe 22. Les moyens d'entraînement 10 comprennent un vérin hydraulique 56, orienté sensiblement verticalement, dont le cylindre 57 est monté pivotant par rapport au bâti selon un axe 58 transversal au véhicule, et dont la tige 59 est montée pivotante à l'arbre de coulissement 54 selon l'axe 22. Chaque vérin 56 est adapté à entraîner le coulissement de l'arbre de coulissement 54 tout le long de la glissière 16 correspondante, aussi bien dans le sens du pliage du toit 4 que de son déploiement, la glissière 16, ayan un profil sans demi-tour selon la direction générale du vérin 56.

Sous l'action des moyens d'entraînement 1Q, les pièces d'activation 53 coulissent le long des glissières 16 en suivant le profil de ces dernières ou pivotent sur elles-mêmes. Le type de mouvement de chaque pièce d'activation 53 est imposé par la position de l'arbre de coulissement 54 dans la glissière 16. Le déplacement du toit 4 est commandé par le coulissement des pièces d'activation 53 et l'activation des moyens de verrouillage 11 par leur pivotement.

Dans le second mode de réalisation, les organes de verrouillage 12 sont portés par l'élément arrière 5 du toit 4, à proximité de son articulation avec l'élément avant 6. De chaque côté du véhicule, une bielle 40 est montée rotative, d'une part, selon un axe 60 transversal au véhicule, à la pièce d'activation 53, et d'autre part, à l'organe de verrouillage 12 correspondant. La pièce d'activation 53 comprend à cet effet un arbre de verrouillage 61 qui s'étend selon l'axe 60. Dans le présent mode de réalisation, l'arbre de verrouillage 61 est à la deuxième extrémité du V.

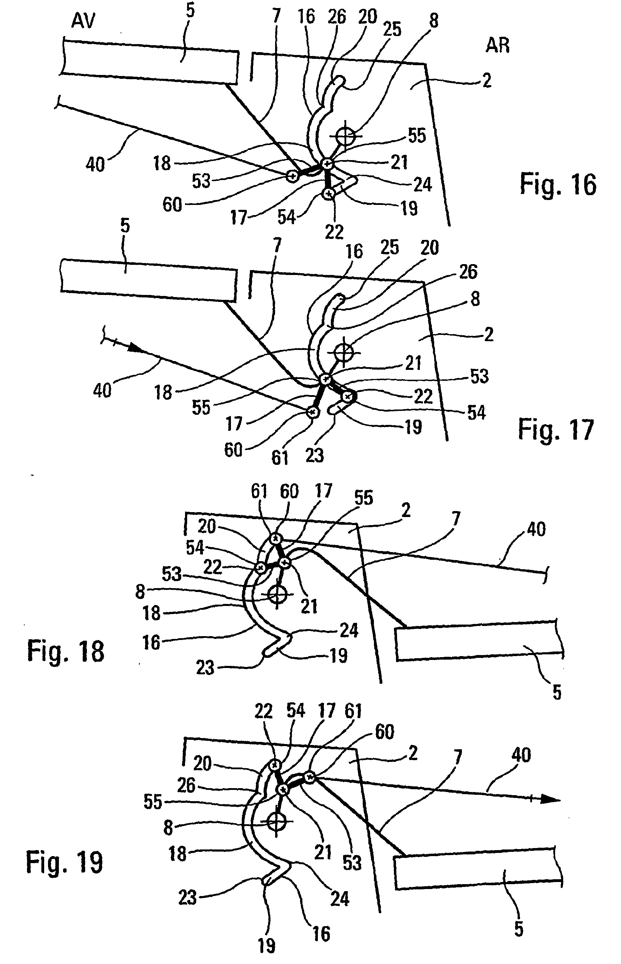

Le mode de fonctionnement du système 15 du second mode de réalisation est le suivant :
Quand l'arbre de coulissement 54 se déplace dans la partie de déplacement 18, il tourne autour de l'axe de rotation 8 du bras 7, comme le fait l'arbre de déplacement 54 relié à ce bras 7 (passage de la figure 17 à la figure 18). Ainsi, quand les moyens d'entraînement 10 entraînent l'arbre de coulissement 54 dans la partie de déplacement 18, l'ensemble de la pièce d'activation 53 tourne autour de l'axe 8 en suivant le profil de cette partie de déplacement 18, et entraîne le déplacement du toit 4. Le mouvement de pivotement de la pièce d'activation 53 sur elle-même est alors nul, et de ce fait, la bielle 40 reste immobile (et donc l'organe de verrouillage 12).

La partie de verrouillage avant 19 a un profil en arc de cercle centré sur la position occupée par l'arbre de déplacement 55 quand l'arbre de coulissement 54 est à la jonction 24 de la partie de verrouillage avant 19 avec la partie de déplacement 18. Ainsi, quand les moyens d'entraînement 10 entraînent l'arbre de coulissement 54 dans la partie de verrouillage avant 19, le toit 4 étant alors en position déployée, l'ensemble de la pièce d'activation 53 pivote sur elle-même autour de l'arbre de déplacement 55, sans tourner autour de l'axe 8 (passage de la figure 16 à la figure 17).

Quand les moyens d'entraînement 10 entraînent le pivotement de la pièce d'activation 53, l'arbre de verrouillage 61 pivote autour de l'arbre de déplacement 55, ce qui entraîne l'activation de l'organe de verrouillage 12 avec le toit 4 en position déployée. Quand l'arbre de coulissement 54 est au point de jonction 24 de la partie de verrouillage avant 19 avec la partie de déplacement 18, l'organe de verrouillage 12 est dans sa position de libération (figure 17), et, quand l'arbre de coulissement 54 est à l'extrémité 23 de la partie de verrouillage avant 19, l'organe de verrouillage 12 est dans sa position de verrouillage (figure 16).

La partie de verrouillage arrière 20 a un profil en arc de cercle centré sur la position occupée par l'arbre de déplacement 55 quand l'arbre de coulissement 54 est à la jonction 26 de la partie de verrouillage arrière 20 avec la partie de déplacement 18. Ainsi, quand les moyens d'entraînement 10 entraînent l'arbre de coulissement 54 dans la partie de verrouillage arrière 20, le toit 4 étant alors en position pliée, l'ensemble de la pièce d'activation 53 pivote sur elle-même autour de l'arbre de déplacement 55 sans tourner autour de l'axe 8 (passage de la figure 18 à la figure 19).

Quand les moyens d'entraînement 10 entraînent le pivotement de la pièce d'activation 53, l'arbre de verrouillage 61 pivote autour de l'arbre de déplacement 55, ce qui entraîne l'activation de l'organe de verrouillage 12 avec le toit 4 en position pliée. Quand l'arbre de coulissement 54 est au point de jonction 26 de la partie de verrouillage arrière 20 avec la partie de déplacement 18, l'organe de verrouillage 12 est dans sa position de libération (figure 18), et, quand l'arbre de coulissement 54 est à l'extrémité 25 de la partie de verrouillage arrière 20, l'organe de verrouillage 12 est dans sa position de verrouillage (figure 19).

Dans le second mode de réalisation, chaque organe de verrouillage 12 comprend une patte de verrouillage 62 qui est montée rotative, d'une part, sur l'élément arrière 5 du toit 4 selon un axe 63 perpendiculaire au plan général de l'élément arrière 5, et, d'autre part, sur la bielle 40.

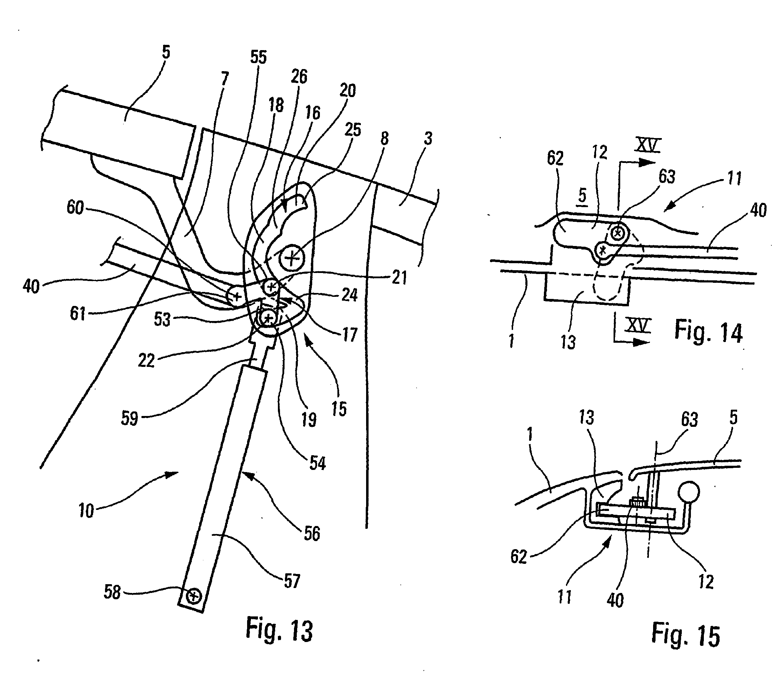

La patte de verrouillage 62 est orientée longitudinalement quand l'organe de verrouillage 12 est dans sa position de libération (comme représenté en trait plein à la figure 14). Quand l'organe de verrouillage 12 est dans sa position de verrouillage, la patte de verrouillage 62 est orientée transversalement au véhicule (comme représenté en tiret à la figure 14) et est adaptée à pénétrer dans l'organe complémentaire de verrouillage 13,14 correspondant (en l'occurrence formé par une fente réalisée le long du brancard 1 ou de l'arche 3, selon le cas), de façon à verrouiller le toit dans sa position déployée ou pliée.

Il serait possible d'apporter des modifications au présent mode de réalisation. Par exemple, le système pourrait être conformé de façon à ne permettre le verrouillage du toit que dans l'une ou l'autre de ses deux positions extrêmes. De plus, le véhicule pourrait ne pas comporter d'arches, le verrouillage du toit en position pliée se faisant sur un autre élément du toit (par exemple, dans le coffre, sur le capot du coffre). En outre, dans le second mode de réalisation, le véhicule pourrait ne pas comporter de brancard.

## Revendications

1. véhicule comprenant un bâti, un toit (4) qui est mobile par rapport au bâti entre une position pliée et une position déployée dans laquelle il recouvre l'habitacle, des moyens d'entraînement (10) qui sont adaptés à entraîner le toit (4) de l'une à l'autre de ses positions extrêmes, et des moyens de verrouillage (11) qui sont adaptés à verrouiller le toit (4) dans au moins l'une de ses positions extrêmes, **caractérisé en ce que** les moyens de verrouillage (11) comprennent, de chaque côté du véhicule, un organe de verrouillage (12) porté par le toit (4) et au moins un organe complémentaire de verrouillage (13,14) porté par le bâti, les organes de verrouillage (12) étant mobiles entre une position de libération et une position de verrouillage dans laquelle ils sont adaptés à coopérer avec les organes complémentaires de verrouillage (13,14) de façon à verrouiller le toit (4) au bâti dans chacune de ses positions extrêmes verrouillables, le déplacement des organes de verrouillage (12) de l'une à l'autre de leur position étant commandé par les moyens d'entraînement (10) qui, sont adaptés à déplacer le toit (4), quand ce dernier est dans chacune de ses positions extrêmes verrouillables.

2. Véhicule selon la revendication 1, **caractérisé en ce que** les moyens d'entraînement (10) sont reliés à un système (15) qui permet de désactiver l'entraînement du toit (4) dans chacune de ses positions extrême verrouillable lors de l'activation des moyens de verrouillage (11).

3. Véhicule selon la revendications 2, **caractérisé en ce que** le système (15) comprend, d'une part, une glissières (16) qui est fixée au bâti et qui comporte une partie de déplacement (18) prolongée à au moins une de ses extrémités par une partie de verrouillage (19,20), et, d'autre part, un dispositif d'activation (17) qui est monté coulissant le long de la glissière (16) et qui est relié au toit (4), aux moyens de verrouillage (11) et aux moyens d'entraînement (10), le dispositif (17) et la glissière (16) étant conformés de sorte que, Le dispositif (17), sous l'action des les moyens d'entraînement (10), d'une part, entraîne le déplacement du toit (4) de l'une à l'autre de ses positions extrêmes quand il coulisse le long de la partie de déplacement (18), et, d'autre part, active les moyens de verrouillage (11) quand il est assujetti à la partie de verrouillage (19,20) correspondant à cette position extrême.

4. Véhicule selon l'une des revendications 1 à 3, **caractérisé ce que** le bâti comprend, deux brancards (1) disposés longitudinalement de chaque côté de l'habitacle, entre lesquels repose le toit (4) en position déployée, chaque brancard (1) portant un organe complémentaire avant de verrouillage (13) adapté à coopérer avec l'organe de verrouillage (12) correspondant de façon à verrouiller le toit (4) en position déployée.

5. véhicule selon l'une des revendications 1 à 4, **caractérisé en ce que** le véhicule comporte des arches (3) disposées longitudinalement dans le prolongement arrière des brancards (1) au-delà des custodes (2), entre lesquelles est disposé le toit (4) en position pliée, chaque arche (3), portant un organe complémentaire arrière de verrouillage (14) adapté à coopérer avec l'organe de verrouillage (12) correspondant de façon à verrouiller le toit (4) en position pliée.

6. Véhicule selon l'une des revendications 1 à 5 dépendantes de la revendication 3, **caractérisé en ce que** la toit (4) comprend, d'une part, un élément arrière (5) dont la partie arrière est montée rotative par rapport au bâti selon un axe (8) transversal au véhicule, et, d'autre part, un élément avant (6) dont la partie arrière est articulée à la partie avant de l'élément arrière (5) du toit (4), et dont la partie avant est, de chaque côté, montée pivotante selon un axe (22) transversal au véhicule par rapport à un coulisseaux (27) faisant partie du dispositif d'activation (17) et monté coulissant et prisonnier dans la glissière (16) réalisée le long du brancard (i) correspondant, l'élément avant (6) portant l'organe de verrouillage (12) à proximité de son articulation avec l'élément arrière (5).

7. Véhicule selon la revendication 6, **caractérisé en ce que** chaque dispositif d'activation (17) est formé, d'une part, par le coulisseau (27), et, d'autre part, par une élément de guidage (28) qui est monté coulissant dans une rainure (29) réalisée le long du coulisseau (27), le déplacement de l'élément de guidage (28) le long de la rainure (29) dépendant de la position du coulisseau (27) dans la glissière (16) et commandant les moyens de verrouillage (11).

8. Véhicule selon la revendication 7, **caractérisé en ce que** les profils de la glissière (16) et de la rainure (29) sont tels que, quand chaque coulisseau (27) se déplace le long de la partie de déplacement (18) qui correspond sensiblement à toute la longueur de la glissière (16), l'élément de guidage (28) correspondant se situe dans une partie centrale (30) de la rainure (29) qui est orientée sensiblement perpendiculairement à l'orientation longitudinale de la partie de déplacement (18) de sorte que le mouvement longitudinal de l'élément de guidage (28) dans le coulisseau (27) est sensiblement nul.

9. Véhicule selon la revendication 8 dépendante de la revendication 4 ou de l'une des revendications qui en dépendent, **caractérisé en ce que** la partie de déplacement (18) est prolongée par une partie de verrouillage avant (19) qui reçoit le coulisseau (27) quand le toit (4) est en position déployée, et qui forme un coude avec la partie de déplacement (18) de sorte que l'extrémité (23) de la partie de verrouillage avant (19) est plus basse que son point de jonction (24) avec la partie de déplacement (18), et **en ce que** la partie centrale (30) de la rainure (29) est prolongée par une partie avant (31) qui est, quand le coulisseau (27) est dans la partie de verrouillage avant (19), sensiblement alignée avec la partie de déplacement (18) de sorte que, quand le coulisseau (27) passe de la partie de déplacement (18) à la partie de verrouillage avant (19), l'élément de guidage (28) coulisse le long de la partie avant (31) de la rainure (29) .

10. Véhicule selon la revendication 8 ou 9 dépendantes de la revendication 5, **caractérisé en ce que** la partie de déplacement (18) est prolongée par une partie de verrouillage arrière (20) qui est reçoit le coulisseau (27) quand le toit (4) est en position pliée, et qui forme un coude avec la partie de déplacement (18) de sorte que l'extrémité (25) de la partie de verrouillage arrière (20) est plus haute que son point de jonction (26) avec la partie de déplacement (18), et **en ce que** la partie centrale (30) de la rainure (29) est prolongée par une partie arrière (32) qui est, quand le coulisseau (27) est dans la partie de verrouillage arrière (20), sensiblement alignée avec la partie de déplacement (18) de sorte que, quand le coulisseau (27) passe de la partie de déplacement (18) à la partie de verrouillage arrière (20), l'élément de guidage (28) coulisse le long de la partie arrière (32) de la rainure (29).

11. Véhicule selon l'une des revendications 1 à 5 dépendantes de la revendication 3, **caractérisé en ce que** le toit (4) comprend un élément arrière (5) dont la partie arrière est fixée à un bras (7) qui est monté rotatif par rapport au bâti selon un axe (8) transversal au véhiculé, et qui est également monté rotatif par rapport à un arbre de déplacement (55) s'étendant transversalement au véhicule et porté par une pièce d'activation (53) formant Le dispositif d'activation (17), l'élément arrière (5) portait l'organe de verrouillage (12) à proximité de son extrémité avant.

12. véhicule selon la revendication 11, **caractérisé en ce que** la pièce d'activation (53) porte un arbre de coulissement (54) qui s'étend transversalement au véhicule, par lequel les moyens d'entraînement (10) sont reliés à La pièce d'activation (53), et par lequel la pièce d'activation (53), d'une part coulisse le long de la glissières, et d'autre part pivote sur elle-même, le type de mouvement de la pièce d'activation (53) qui commande les moyens de verrouillage (11) dépendant de la position de l'arbre de coulissement (54) dans ta glissière(16).

13. Véhicule selon la revendication 12, **caractérisé en ce que** le profil de la glissière (16) et la configuration de la pièce d'activation (53) sont tels que, quand l'arbre de coulissement (54) coulisse le long de la partie de déplacement (18) qui forme un arc de cercle centré sur l'axe (8) de rotation de l'élément arrière (5) du toit (4) par rapport au bâti, l'ensemble de la pièce d'activation (53) tourne autour de l'axe (8) et entraîne le déplacement du toit (4).

14. Véhicule selon la revendication 13 dépendante de la revendication 4 ou de l'une des revendications qui en dépendent, **caractérisé en ce que** la partie de déplacement (18) est prolongée par une partie de verrouillage avant (19) dans laquelle coulisse l'arbre de coulissement (54) quand le toit (4) est en position déployée, et **en ce que** la partie de verrouillage avant (19) qui forme un coude avec la partie de déplacement (18) forme un arc de cercle centré sur la position de l'arbre de déplacement (55) quand l'arbre de coulissement (54) est à la jonction (24) de la partie de verrouillage avant (19) avec la partie de déplacement (18) de sorte que, quand l'arbre de coulissement (54) coulisse le long de la partie de verrouillage avant (19), la pièce d'articulation (53) pivote sur elle-même autour de l'arbre de déplacement (55) sans tourner autour de l'axe (8).

15. Véhicule selon la revendication 13 ou 14 dépendantes de la revendication 5, **caractérisé en ce que** la partie de déplacement (18) est prolongée par une partie de verrouillage arrière (20) dans laquelle coulisse l'arbre de coulissement (54) quand le toit (4) est en position pliée, et **en ce que** la partie de verrouillage arrière (20) qui forme un coude avec la partie de déplacement (18) forme un arc de cercle centré sur la position de l'arbre de déplacement (55) quand l'arbre de coulissement (54) est à la jonction (26) de la partie de verrouillage arrière (20) avec la partie de déplacement (18) de sorte que, quand l'arbre de coulissement (54) coulisse le long de la partie de verrouillage arrière (20), la pièce d'articulation (53) pivote sur elle-même autour de l'arbre de déplacement (55) sans tourner autour de l'axe (8).

## Claims

1. Vehicle comprising a frame, a roof (4) that is able to move with respect to the frame between a folded position and a deployed position in which it covers the cabin, driving means (10) that are adapted to drive the roof (4) from one of its extreme positions to the other, and locking means (11) that are adapted to lock the roof (4) in at least one of its extreme positions, **characterised in that** the locking means (11) comprise, on each side of the vehicle, a locking member (12) carried by the roof (4) and at least one complementary locking member (13, 14) carried by the frame, the locking members (12) being able to move between a release position and a locking position in which they are adapted to cooperate with the complementary locking members (13, 14) so as to lock the roof (4) to the frame in each of its lockable extreme positions, the movement of the locking members (12) from one of their positions to the other being controlled by the driving means (10) that are adapted to move the roof (4), when the latter is in each of its lockable extreme positions.

2. Vehicle according to claim 1, **characterised in that** the driving means (10) are connected to a system (15) that makes it possible to deactivate the driving of the roof (4) in each of its lockable extreme positions when the locking means (11) are activated.

3. Vehicle according to claim 2, **characterised in that** the system (15) comprises firstly a runner (16) that is fixed to the frame and comprises a movement part (18) extended at at least one its ends by a locking part (19, 20), and secondly an activation device (17) that is mounted so as to slide along the runner (16) and is connected to the roof (4), to the locking means (11) and to the driving means (10), the device (17) and the runner (16) being conformed so that the device (17), under the action of the driving means (10), firstly causes the movement of the roof (4) from one of its extreme positions to the other when it slides along the movement part (18), and secondly activates the locking means (11) when it is under the control of the locking part (19, 20.) corresponding to this extreme position.

4. Vehicle according to one of claims 1 to 3, **characterised in that** the frame comprises two beams (1) disposed longitudinally on each side of the cabin, between which the roof (4) rests in the deployed position, each beam (1) carrying a front complementary locking member (13) adapted to cooperate with the corresponding locking member (12) so as to lock the roof (4) in the deployed position.

5. Vehicle according to one of claims 1 to 4, **characterised in that** the vehicle comprises arches (3) disposed longitudinally in rear extension to the beams (1) beyond the rear side panels (2) between which the roof (4) is disposed in the folded position, each arch (3) carrying a rear complementary locking member (14) adapted to cooperate with the corresponding locking member (12) so as to lock the roof (4) in the folded position.

6. Vehicle according to one of claims 1 to 5 dependent on claim 3, **characterised in that** the roof (4) comprises firstly a rear element (5), the rear part of which is mounted so as to rotate with respect to the frame on an axis (8) transverse to the vehicle, and secondly a front element (6), the rear part of which is articulated at the front part of the rear element (5) of the roof (4), and the front part of which is, on each side, mounted so as to pivot on an axis (22) transverse to the vehicle with respect to a slide (27) forming part of the activation device (17) and mounted slidably and captive in the runner (16) produced along the corresponding beam (1), the front element (6) carrying the locking member (12) close to its articulation with the rear element (5).

7. Vehicle according to claim 6, **characterised in that** each activation device (17) is formed firstly by the slide (27) and secondly by a guide element (28) that is mounted so as to slide in a groove (29) produced along the slide (27), the movement of the guide element (28) along the groove (29) depending on the position of the slide (27) in the runner (16) and controlling the locking means (11).

8. Vehicle according to claim 7, **characterised in that** the profile of the runner (16) and groove (29) are such that each slide (27) moves along the movement part (18) that corresponds substantially to the entire length of the runner (16), the corresponding guide element (28) is situated in a central part (30) of the groove (29) that is oriented substantially perpendicular to the longitudinal orientation of the movement part (18) so that the longitudinal movement of the guide element (28) in the slide (27) is substantially zero.

9. Vehicle according to claim 8 dependent on claim 4 or one of the claims that depend on it, **characterised in that** the movement part (18) is extended by a front locking part (19) that receives the slide (27) when the roof (4) is in the deployed position, and forms an elbow with the movement part (18) so that the end (23) of the front locking part (19) is lower than its junction point (24) with the movement part (18), and **in that** the central part (30) of the groove (29) is extended by a front part (31) that is, when the slide (27) is in the front locking part (19), substantially aligned with the movement part (18) so that, when the slide (27) passes from the movement part (18) to the front locking part (19), the guide element (24) slides along the front part (31) of the groove (29).

10. Vehicle according to claim 8 or 9 dependent on claim 5, **characterised in that** the movement part (18) is extended by a rear locking part (20) that receives the slide (27) when the roof (4) is in the folded position, and forms an elbow with the movement part (18) so that the end (25) of the rear locking part (20) is higher than its junction point (26) with the movement part (18), and **in that** the central part (30) of the groove (29) is extended by a rear part (32) that is, when the slide (27) is in the rear locking part (20), substantially aligned with the movement part (18) so that, when the slide (27) passes from the movement part (18) to the rear locking part (20), the guide element (28) slides along the rear part (31) of the groove (29).

11. Vehicle according to one of claims 1 to 5 dependent on claim 3, **characterised in that** the roof (4) comprises a rear element (5), the rear part of which is fixed to an arm (7) that is mounted so as to rotate with respect to the frame on an axis (8) transverse to the vehicle and is also mounted so as to rotate with respect to a movement shaft (55) extending transversely to the vehicle and carried by an activation piece (53) forming the activation device (17), the rear element (5) carrying the locking member (12) close to its front end.

12. Vehicle according to claim 11, **characterised in that** the activation piece (53) carries a sliding shaft (54) that extends transversely to the vehicle, by means of which the driving means (10) are connected to the activation piece (53) and by means of which the activation piece (53) on the one hand slides along the runner (16) and on the other hand pivots on itself, the type of movement of the activation piece (53) that controls the locking means (11) depending on the position of the sliding shaft (54) in the runner (16).

13. Vehicle according to claim 12, **characterised in that** the profile of the runner (16) and the configuration of the activation piece (53) are such that, when the sliding shaft (54) slides along the movement part (18) which forms an arc of circle centred on the rotation axis (8) of the rear element (5) of the roof (4) with respect to the frame, the whole of the activation piece (53) turns about the axis (8) and causes the movement of the roof (4).

14. Vehicle according to claim 13 dependent on claim 4 or one of the claims that depend on it, **characterised in that** the movement part (18) is extended by a front locking part (19) in which the sliding shaft (54) slides when the roof (4) is in the deployed position, and **in that** the front locking part (19) that forms an elbow with the movement part (18) forms an arc of a circle centred on the position of the movement shaft (55) when the sliding shaft (54) is at the junction (24) of the front locking part (19) with the movement part (18) so that, when the sliding shaft (54) slides along the front locking part (19), the articulation piece (53) pivots on itself about the movement shaft (55) without turning about the axis (8).

15. Vehicle according to claim 13 or 14 dependent on claim 5, **characterised in that** the movement part (18) is extended by a rear locking part (20) in which the sliding shaft (54) slides when the roof (4) is in the folded position, and **in that** the rear locking part (20) that forms an elbow with the movement part (18) forms an arc of a circle centred on the position of the movement shaft (55) when the sliding shaft (54) is at the junction (26) of the rear locking part (20) with the movement part (18) so that, when the sliding shaft (54) slides along the rear locking part (20), the articulation piece (53) pivots on itself about the movement shaft (55) without turning about the axis (8).

## Patentansprüche

1. Fahrzeug mit einem Rahmen, einem Dach (4), das in Bezug zum Rahmen zwischen einer zusammengeklappten Position und einer ausgefahrenen Position, in welcher dieses den Fahrgastraum abdeckt, beweglich ist, einer Antriebseinrichtung (10), die so ausgelegt ist, dass diese das Dach (4) aus der einen in die andere seiner Extrempositionen mitnimmt, und einer Verriegelungseinrichtung (11), die so ausgelegt ist, dass diese das Dach (4) in wenigstens einer seiner Extrempositionen verriegelt, **dadurch gekennzeichnet, dass** die Verriegelungseinrichtung (11) an jeder Seite des Fahrzeugs ein am Dach (4) abgestütztes Verriegelungselement (12) und wenigstens ein am Rahmen abgestütztes komplementäres Verriegelungselement (13, 14) umfasst, wobei die Verriegelungselemente (12) zwischen einer Freigabeposition und einer Verriegelungsposition, in welcher sie so ausgelegt sind, dass sie mit den komplementären Verriegelungselementen (13, 14) zusammenwirken, um das Dach (4) in jeder seiner verriegelbaren Extrempositionen zu verriegeln, beweglich sind, wobei die Verschiebung der Verriegelungselemente (12) aus der einen in die andere ihrer Position durch die Antriebseinrichtung (10) gesteuert wird, die so ausgelegt ist, dass sie das Dach (4) verschiebt, wenn sich dieses in jeder seiner verriegelbaren Extrempositionen befindet.

2. Fahrzeug nach Anspruch 1, **dadurch gekennzeichnet, dass** die Antriebseinrichtung (10) mit einem System (15) verbunden ist, welches ermöglicht, den Antrieb des Daches (4) während des Aktivzustands der Verriegelungseinrichtung (11) in jeder seiner verriegelbaren Extrempositionen zu deaktivieren.

3. Fahrzeug nach Anspruch 2, **dadurch gekennzeichnet, dass** das System (15) umfasst einerseits eine Gleitschiene (16), die am Rahmen fixiert ist und die einen Verschiebeteil (18) umfasst, der an wenigstens einer seiner Enden durch einen Verriegelungsteil (19, 20) verlängert ist, und andererseits eine Aktivierungsemrichtung (17), die verschiebbar entlang der Gleitschiene (16) angebracht ist, und die mit dem Dach (4), der Verriegelungseinrichtung (11) und der Antriebseinrichtung (10) verbunden ist, wobei die Einrichtung (17) und die Gleitschiene (16) derart konform ausgebildet sind, dass die Einrichtung (17) unter Wirkung der Antriebseinrichtung (10) einerseits die Verschiebung des Daches (4) von der einen in die andere seiner Extrempositionen antreibt, wenn sich dieses entlang des Verschiebungsteils (18) verschiebt, und andererseits die Verriegelungseinrichttmg (11) aktiviert, wenn dieses unter dem Kontrolle des Verriegelungsteils (19, 20) das dieser Extremposition entspricht, liegt..

4. Fahrzeug nach einem der Ansprüche 1 bis 3, **dadurch gekennzeichnet, dass** der Rahmen zwei Längsträger (1) umfasst, die entlang jeder Seite des Fahrgastraumes angeordnet sind, zwischen welchen das Dach (4) in der ausgefahrenen Position liegt, wobei jeder Längsträger (1) ein komplementäres Vorverrieglungselement (13) umfasst, das so ausgebildet ist, dass dieses mit dem korrespondierenden Verriegelungselement (12) zusammenwirkt, um so das Dach (4) in der ausgefahrenen Position zu verriegeln.

5. Fahrzeug nach einem der Ansprüche 1 bis 4, **dadurch gekennzeichnet, dass** das Fahrzeug Bogenteile (3) umfasst, die in Längsrichtung in der hinteren Verlängerung der Längsträger (1) jenseits der Kustoden (2) angeordnet sind, zwischen welchen das Dach (4) in der zusammengeklappten Position angeordnet ist, wobei jedes Bogenteil (3) ein komplementäres Hinterverriegelungselement (14) trägt, das so ausgebildet ist, dass dieses mit dem korrespondierenden Verriegelungselement (12) zusammenwirkt, um das Dach (4) in der zusammengeklappten Position zu verriegeln.

6. Fahrzeug nach einem der Ansprüche 1 bis 5, in Abhängigkeit von Anspruch 3, **dadurch gekennzeichnet, dass** das Dach (4) umfasst einerseits ein hinteres Element (5), dessen hinterer Teil drehbar in Bezug zum Rahmen um eine Querachse (8) des Fahrzeugs angebracht ist, und andererseits ein vorderes Element (6), dessen hinterer Teil an den vorderen Teil des hinteren Elements (5) des Daches (4) angelenkt ist, und dessen vorderer Teil an jeder Seite schwenkbar um eine Querachse (22) des Fahrzeugs in Bezug zu einem Gleitstück (27) schwenkbar angebracht ist, das einen Teil der Aktivierungseinrichtung (17) bildet und verschiebbar und in der Gleitschiene (16) gefangen angebracht ist, welche entlang des korrespondierenden Längsträgers (1) realisiert ist, wobei das vordere Element (6) das Verriegelungselement (12) in der Nähe seiner Anlenkung an das hintere Element (5) trägt.

7. Fahrzeug nach Anspruch 6, **dadurch gekennzeichnet, dass** jede Aktivierungseinrichtung (17) gebildet ist einerseits durch das Gleitstück (27) und andererseits durch ein Führungselement (28), das verschiebbar in einer Nut (29) angebracht ist, die entlang des Gleitstücks (27) ausgebildet ist, wobei die Verschiebung des Führungselements (28) entlang der Nut (29) von der Position des Gleitstücks (27) in der Gleitschiene (16) abhängt und die Verriegelungseinrichtung (11) steuert.

8. Fahrzeug nach Anspruch 7, **dadurch gekennzeichnet, dass** die Profile der Gleitschiene (16) und der Nut (29) derart sind, dass jedes Gleitstück (27) entlang des Verschiebebereichs (18) verschiebt, der im Wesentlichen der gesamten Länge der Gleitschiene (16) entspricht, wobei das korrespondierende Führungselement (28) in einem zentralen Teil (30) der Nut (29) liegt, der im Wesentlichen senkrecht zu der Längsrichtung des Verschiebeteils (18) ausgerichtet ist, derart, dass die Längsbewegung des Führungselements (28) in dem Gleitstück (27) im Wesentlichen Null ist.

9. Fahrzeug nach Anspruch 8, in Abhängigkeit von Anspruch 4 oder von einem der Ansprüche, die von diesem abhängen, **dadurch gekennzeichnet, dass** das Verschiebeteil (18) durch einen vorderen Verriegelungsbereich (19) verlängert ist, der das Gleitstück (27) aufnimmt, wenn sich das Dach (4) in der zusammengeklappten Position befindet, und der mit dem Verschiebeteil (18) eine Krümmung bildet, derart, dass das Ende (23) des vorderen Verriegelungsteils (19) tiefer als sein Verbindungspunkt (24) mit dem Verschiebeteil (18) liegt, und dass der zentrale Teil (30) der Nut (29) durch einen vorderen Teil (31) verlängert ist, der, wenn sich das Gleitstück (27) in dem vorderen Verriegelungsteil (19) befindet, im Wesentlichen mit dem Verschiebeteil (18) ausgerichtet ist, derart, dass, wenn das Gleitstück (27) den Verschiebeteil (18) am vorderen Verriegelungsteil (19) passiert, das Führungselement (28) sich entlang des vorderen Teils (31) der Nut (29) verschiebt.

10. Fahrzeug nach Anspruch 8 oder 9, in Abhängigkeit von Anspruch 5, **dadurch gekennzeichnet, dass** der Verschiebeteil (18) durch einen hinteren Verriegelungsteil (20) verlängert ist, der das Gleitstück (27) aufnimmt, wenn sich das Dach (4) in der zusammengeklappten Position befindet, und der eine Krümmung mit dem Verschiebeteil (18) bildet, derart, dass das Ende (25) des hinteren Verriegelungsteils (20) höher als sein Verbindungspunkt (26) mit dem Verschiebeteil (18) bildet, und dass der zentrale Teil (30) der Nut (29) durch einen hinteren Teil (32) verlängert ist, der, wenn sich das Gleitstück (27) in dem hinteren Verriegelungsteil (20) befindet, im Wesentlichen mit dem Verschiebeteil (18) ausgerichtet ist, derart, dass, wenn das Gleitstück (27) den Verschiebeteil (18) an dem hinteren Verriegelungsteil (20) passiert, das Führungselement (28) sich entlang des hinteren Teils (32) der Nut (29) verschiebt.

11. Fahrzeug nach den Ansprüchen 1 bis 5, in Abhängigkeit von dem Anspruch 3, **dadurch gekennzeichnet, dass** das Dach (4) ein hinteres Element (5) umfasst, dessen hinterer Teil an einem Arm (7) fixiert ist, der drehbar in Bezug zum Rahmen um eine Querachse (8) des Fahrzeugs montiert ist, und der auch drehbar in Bezug zu einer Verschiebungsachse (55) angebracht ist, die sich quer zum Fahrzeug erstreckt und durch ein Aktivienmgsstück (53) getragen wird, das die Aktivierungseinrichtung (17) bildet, wobei das hintere Element (5) das Verriegelungselement (12) in der Nähe seines vorderen Endes trägt.

12. Fahrzeug nach Anspruch 11, **dadurch gekennzeichnet, dass** das Aktivienmgsstück (53) eine Schiebeachse (54) trägt, die sich quer zum Fahrzeug erstreckt, durch welche die Antriebseinrichtung (10) mit dem Aktivienmgsstück (53) verbunden ist, und durch welche das Aktivienmgsstück (53) einerseits entlang der Gleitschiene (16) gleitet und andererseits um sich selbst schwenkt, wobei die Bewegungsart des Aktivienmgsstückes (53), die die Verriegelungseinrichtung (11) steuert, von der Position der Gleitachse (54) in der Gleitschiene (16) abhängig ist.

13. Fahrzeug nach Anspruch 12, **dadurch gekennzeichnet, dass** das Profil der Gleitschiene (16) und die Konfiguration des Aktivienmgsstücks (53) derart sind, dass, wenn die Gleitachse (54) entlang des Verschiebungsteils (18) gleitet, das einen Kreisbogen bildet, der auf der Drehachse (8) des hinteren Elements (5) des Dachses (4) zentriert ist, in Bezug zum Rahmen gleitet, wobei die Gesamtheit des Aktivierungsstücks (53) um die Achse (8) dreht und die Verschiebung des Daches (4) antreibt.

14. Fahrzeug nach Anspruch 13 in Abhängigkeit von Anspruch 4 oder einem der Ansprüche, die von diesem abhängen, **dadurch gekennzeichnet, dass** der Verschiebeteil (18) durch einen vorderen Verriegelungsteil (19) verlängert ist, in welchem die Gleitachse (54) gleitet, wenn sich das Dach (4) in der ausgefahrenen Position befindet, wobei der vordere Verriegelungsteil (19), der eine Krümmung mit dem Verschiebeteil (18) bildet, das einen Kreisbogen bildet, der zu der Position der Verschiebeachse (55) zentriert ist, wenn die Gleitachse (54) in Verbindung (54) des vorderen Verriegelungsteils (19) mit dem Verschiebeteil (18) steht, derart, dass, wenn die Gleitachse (54) entlang des vorderen Verriegelungsteils (19) gleitet, das Gelenkteil (53) selbst um die Verschiebeachse (55) schwenkt, ohne sich um die Achse (8) zu drehen.

15. Fahrzeug nach Anspruch 13 oder 14, in Abhängigkeit von Anspruch 5, **dadurch gekennzeichnet, dass** der Verschiebeteil (18) durch einen hinteren Verriegelungsteil (20) verlängert ist, in welchem die Gleitachse (54) gleitet, wenn sich das Dach (4) in der zusammengeklappten Position befindet, wobei der hintere Verriegelungsteil (20), der eine Krümmung mit dem Verschiebeteil (18) bildet, einen Kreisbogen bildet, der zu der Position der Verschiebeachse (55) zentriert ist, wenn sich die Gleitachse (54) in Verbindung (26) des hinteren Verriegelungsteils (20) mit dem Verschiebeteil (18) befindet, derart, dass, wenn die Gleitachse (54) entlang des hinteren Verriegelungsteils (20) gleitet, das Gelenkstück (53) selbst um die Verschiebeachse (55) schwenkt, ohne sich um die Achse (8) zu drehen.
